# EUROPEAN PATENT SPECIFICATION

(11) **EP 0 488 587 B1**
(45) Date of publication and mention of the grant of the patent: **15.05.1996**
(21) Application number: 91310732.2
(22) Date of filing: 21.11.1991
(51) Int. Cl.: C03B 9/38, C03B 9/193, C03B 9/40

(54) **Plunger mechanism for an I.S. machine**
Pressenstössel für I.S.-Maschine
Poinçon plongeur pour machine-I.S.

(30) Priority: 28.11.1990 US 619051
(43) Date of publication of application: 03.06.1992
(73) Proprietor: Emhart Glass Machinery Investments Inc., Wilmington, Delaware 19801 (US)
(72) Inventor: Trahan, Albert J., Tolland, Connecticut 06066 (US); Abbott, Vaughan, Hartford, Connecticut 06027 (US); Stankosky, Michael J., Hartford, Connecticut 06095 (US)
(74) Representative: Randall, John Walter

(56) References cited:
- EP-A- 0 217 187
- GB-A- 2 058 042
- GB-A- 2 115 803
- US-A- 3 178 276

## Description

The present invention relates to individual section machines which receive a gob of molten glass and form it into a glass container such as a bottle.

When bottles are formed by the press and blow process the molten gob is first formed into a parison on the blank side of the machine by forcing a plunger, which is a part of a plunger mechanism, into the molten gob. The formed parison is transferred to the finish side of the machine where it will be blown into the finished bottle.

The plunger must be effectively cooled if it is to operate properly and conventionally this is done by supplying cooling air to the interior of the plunger and then exhausting this air through a lower cylinder portion of the plunger mechanism.

Heat transfer through the lower cylinder portion in a multi-gob section has long been a problem since heat transfer is not uniform. As a result, designs have been proposed to vent exhausted cooling air above the lower cylinder portion into a section box which supports the plunger mechanism but this tends to elevate the temperature both of the cooling air and allows dirt to enter the plunger positioner which has undesirable consequences.

It is accordingly an object of the present invention to reduce the transfer of heat from exhausted cooling air to cooling air entering the plunger mechanism.

The present invention provides a plunger mechanism for an individual section glass container forming machine, as disclosed in e.g. EP-A1-0 217 187, comprising
an upper cylinder portion,
a lower cylinder portion having a plurality of chambers for receiving a corresponding plurality of selectively displaceable pistons on which plungers may be secured,
said pistons defining a centerline of the plunger mechanism including a conduit through which cooling air can be supplied to the plungers,
the upper cylinder portion including conduit means including exit ports at the bottom thereof for venting cooling air exhausted from the plungers, and the
lower cylinder portion including a vertical chamber between each pair of said pistons and on either side of the centerline extending from a location proximate to the top of the lower cylinder portion to a location proximate to the bottom thereof, which is characterized in that the chamber is in the form of an open sided channel, and
a tubular sleeve is located in each channel and extends from the top of the lower cylinder portion to the bottom thereof for conveying exhaust air from an exit port to the bottom of the lower cylinder portion,
said tubular sleeve having a diameter such that the exterior thereof is spaced from said vertical channel.

There now follows a description, to be read with reference to the accompanying drawings which illustrate a presently preferred embodiment illustrating the invention.

Referring the drawings:
Figure 1 is an elevational cross-sectional view of a triple gob plunger mechanism; and
Figure 2 is a top view of a lower cylinder housing of the plunger mechanism shown in figure 1; in position on a base plate;
Figure 3 is a view taken at 2-2 of figure 1
Figure 4 is a cross-sectional view of an edge portion of the plunger mechanism taken along line 4-4 of Figure 3.

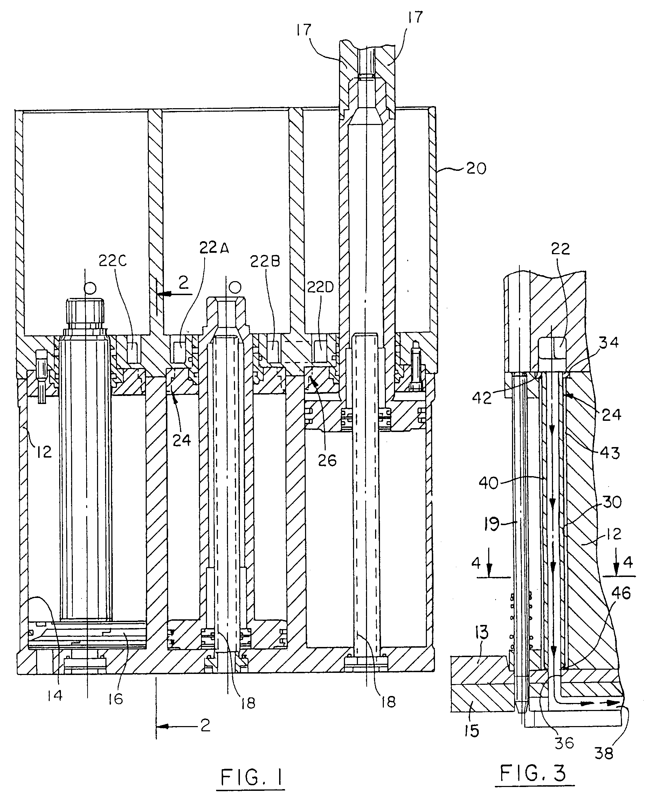

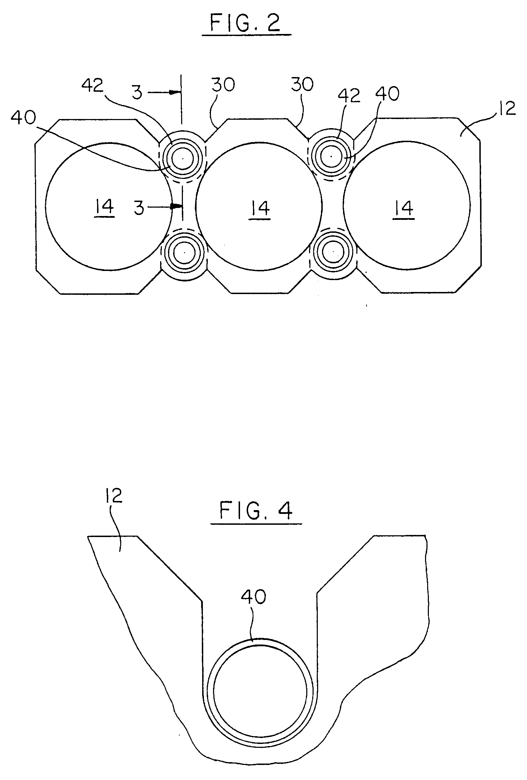

An individual section glass container forming machine includes a plurality of sections each having a blank side and a finish side. The plunger mechanism at the blank side in a multi-gob press and blow machine includes a lower cylinder portion 12 having a plurality of chambers 14 in which pistons 16 are displaceable to selectively elevate gob engaging plungers 17 which are secured to the top of the pistons. As shown in Figure 3, the plunger mechanism is secured to base plates 13, 15 of the machine by means which include a locking stud 19 and tie down rods (not shown). The central axes of the plungers 17 as seen from Figure 2 lie in a common vertical plane. Cooling air is supplied to the plungers via conduits 18 within the pistons and this air is exhausted from the plungers and passes through suitable conduits in an upper cylinder portion 20 exiting these conduits at exit ports 22. As shown in figure 1, the exhaust air from the central plunger is exhausted through a pair of exit ports 22A, 22B whereas the exhaust air from the side plungers is exhausted through a single exit port 22C, 22D.

Exit ports 22A and 22C communicate with a pair of exhaust ports 24 symmetrically located at the upper end of the lower cylinder between the left two chambers 14 while exit ports 22B and 22D communicate with a pair of exhaust ports 26 symmetrically located at the upper end of the lower cylinder between the right two chambers 14. Each of these exhaust ports 24 and 26 has a recessed upper end 34. At the lower end of the lower cylinder portion 12 directly below exhaust ports 24 and 26 are bores 36 extending through the base plates 13 and 15 as shown in Figure 3. Between the exhaust ports 24 and 26 at the upper end and bores 36 at the lower end, the side wall of the lower cylinder portion 12 is machined a vertical chamber 30 in the form of an open sided channel. A tubular sleeve 40 has a collar portion 42 which is supported within the recess 34 and has a thickness selected so that it will be effectively clamped between the upper cylinder portion 20 and the lower cylinder portion thereby assuring that exhaust air will flow into and through the sleeve 40. The outer diameter of the sleeve 40 is of such a size relative to the surface of the chamber 30 to create an annular air space 43 around one half of the sleeve 40 and an open area to the atmosphere around the other half of the sleeve 40 thereby spacing the lower cylinder 12 from the hot sleeves 40. As can be seen from Figure 2 a sleeve 40 is located on either side of the central plane between each pair of cylinders. A lower end 46 of each sleeve 40 is wedgedly fitted into the bores 36 which permits the transfer of hot exhaust air to an exit port 38 in the base plate 15.

## Claims

1. A plunger mechanism for an individual section glass container forming machine comprising
an upper cylinder portion (20),
a lower cylinder portion (12) having a plurality of chambers (14) for receiving a corresponding plurality of selectively displaceable pistons (16) on which plungers (17) may be secured,
said pistons (16) defining a centerline of the plunger mechanism including a conduit (18) through which cooling air can be supplied to the plungers,
the upper cylinder portion including conduit means including exit ports (22) at the bottom thereof for venting cooling air exhausted from the plungers, and the
lower cylinder portion (12) including a vertical chamber (30) between each pair of said pistons and on either side of the centerline extending from a location proximate to the top of the lower cylinder portion (12) to a location proximate to the bottom thereof, characterized in that the chamber (30) is in the form of an open sided channel, and
a tubular sleeve (40) is located in each channel (30) and extends from the top of the lower cylinder portion to the bottom thereof for conveying exhaust air from an exit port (22) to the bottom of the lower cylinder portion,
said tubular sleeve having a diameter such that the exterior thereof is spaced from said vertical channel.

2. A plunger mechanism according to claim 1 wherein there are three chambers (14).

3. A plunger mechanism according to claim 1, wherein said tubular sleeve (40) includes a collar (42) compressively located between the bottom surface of said upper cylinder portion (20) and the upper surface of a recessed portion (34) in the lower cylinder portion (12).

## Patentansprüche

1. Stößelmechanik für eine IS-Maschine zur Herstellung von Glasbehältern mit
einem oberen Zylinderteil (20) und
einem unteren Zylinderteil (12) mit einer Vielzahl von Kammern (14) zur Aufnahme einer entsprechenden Vielzahl von wahlweise verschiebbaren Kolben (16), an denen Stößel (17) befestigt werden können,
wobei die Kolben (16) eine Mittellinie der Stößelmechanik bilden und einen Kanal (18) enthalten, durch den Kühlluft den Stößein zugeführt werden kann,
der obere Zylinderteil eine Leitungseinrichtung mit unten liegenden Austrittsöffnungen (22) aufweist, um aus den Stößeln abgelassene Kühlluft an die Umluft abzugeben, und
der untere Zylinderteil (12) zwischen den Kolbenpaaren jeweils eine vertikale Kammer (30) aufweist, die beiderseits der Mittellinie von einem Ort am oberen Ende des unteren Zylinderteils (12) zu einem Ort an dessen unterem Ende verläuft,
**dadurch gekennzeichnet,** daß
die Kammer (30) die Form eines einseitig offenen Kanals hat und
in jedem Kanal (30) ein Rohr (40) angeordnet ist, das von oben nach unten durch den unteren Zylinderteil verläuft, um Abluft von einer Austrittsöffnung (22) zum unteren Ende des unteren Zylinderteil zu leiten,
wobei das Rohr einen solchen Durchmesser hat, daß seine Außenfläche von dem vertikalen Kanal beabstandet liegt.

2. Stößelmechanik nach Anspruch 1, in der drei Kammern (14) vorliegen.

3. Stößelmechanik nach Anspruch 1, bei der das Rohr (40) einen Kragen (42) aufweist, der zwischen der unteren Stirnfläche des oberen Zylinderteils (20) und der oberen Abschlußfläche eines vertieften Bereichs (34) im unteren Zylinderteil (12) eingespannt ist.

## Revendications

1. Mécanisme à poinçons équipant une machine de sections individuelles de formage de récipients en verre, comprenant
une partie cylindrique supérieure (20),
une partie cylindrique inférieure (12) munie d'une pluralité de poches (14) conçues pour recevoir une pluralité correspondante de pistons (16) mobiles sélectivement, auxquels des poinçons (17) peuvent être assujettis,
lesdits pistons (16) définissant un axe médian de mécanisme à poinçons, présentant un conduit (18) par l'intermédiaire duquel de l'air de refroidissement peut être délivré aux poinçons,
la partie cylindrique supérieure étant dotée de moyens de circulation comprenant dans leur fond, des orifices de sortie (22) pour chasser de l'air de refroidissement expulsé par les poinçons, et
la partie cylindrique inférieure (12) comportant, entre chaque paire desdits pistons et de part et d'autre de l'axe médian, une chambre verticale (30) s'étendant d'un emplacement proche du sommet de la partie cylindrique inférieure (12) jusqu'à un emplacement proche du fond de cette dernière, caractérisé par le fait que
la chambre (30) revêt la forme d'un canal à flancs ouverts, et une gaine tubulaire (40) est disposée dans chaque canal (30) et s'étend du sommet de la partie cylindrique inférieure jusqu'au fond de cette dernière en vue de convoyer de l'air d'évacuation, provenant d'un orifice de sortie (22), vers le fond de la partie cylindrique inférieure,
ladite gaine tubulaire présentant un diamètre tel que son extérieur soit espacé dudit canal vertical.

2. Mécanisme à poinçons selon la revendication 1, dans lequel trois poches (14) sont prévues.

3. Mécanisme à poinçons selon la revendication 1, dans lequel ladite gaine tubulaire (40) comporte une collerette (42) interposée, avec compression, entre la surface de fond de ladite partie cylindrique supérieure (20) et la surface supérieure d'une zone évidée (34), ménagée dans la partie cylindrique inférieure (12).
